# FASCICULE DE BREVET EUROPEEN

(11) **EP 1 306 689 B1**
(45) Date de publication et mention de la délivrance du brevet: **09.04.2008**
(21) Numéro de dépôt: 02292615.8
(22) Date de dépôt: 22.10.2002
(51) Int. Cl.: G01S 7/04, G01S 13/87

(54) **Procédé et système d'enregistrement et lecture synchronisée de données provenant d'une pluralité d'équipements terminaux**
Verfahren und System zum Aufnehmen und synchronisierte Wiedergabe von aus mehreren Endgeräten herkommenden Daten
Method and system for recording and synchronized reading of data coming from a plurality of terminals

(30) Priorité: 26.10.2001 FR 0113900
(43) Date de publication de la demande: 02.05.2003
(73) Titulaire: Thales, 75008 Paris (FR)
(72) Inventeur: Miras, Bertrand, c/o Thales Intellectual Property, 94117 Arcueil Cedex (FR)
(74) Mandataire: Chaverneff, Vladimir

(56) Documents cités:
- DE-A- 3 640 401
- DE-A- 19 820 324
- FR-A- 2 807 848
- MOTTY S ET AL: "Digital recording system for high-resolution radar" ELECTRICAL AND COMPUTER ENGINEERING, 1997. ENGINEERING INNOVATION: VOYAGE OF DISCOVERY. IEEE 1997 CANADIAN CONFERENCE ON ST. JOHNS, NFLD., CANADA 25-28 MAY 1997, NEW YORK, NY, USA,IEEE, US, 25 mai 1997 (1997-05-25), pages 843-846, XP010235137 ISBN: 0-7803-3716-6

## Description

La présente invention concerne les techniques d'enregistrement et de rejeu synchronisé de données provenant d'une pluralité d'équipements terminaux. Elle s'applique notamment au tests de systèmes de gestion du trafic aérien, les équipements terminaux étant dans cette application des radars.

Afin de tester les systèmes de gestion de trafic aérien, on peut enregistrer les données des différentes voies radar avec des analyseurs DAT (cassettes magnétiques) par exemple. Une fois ces données enregistrées, on les rejoue sur une plate-forme de test. Cependant, les analyseurs DAT ne permettent pas d'enregistrer des données de manière suffisamment régulière pour garantir une vitesse de rejeu constante. En effet, le système d'entraînement de la bande magnétique est un système mécanique, ce qui induit inévitablement des dérives (avances ou retard) au cours de l'enregistrement. De plus, les analyseurs DAT étant initialement conçus pour enregistrer des ondes sonores, leur bande passante est limitée (20kB/s). Il n'est donc pas possible d'enregistrer un grand nombre de voies simultanément, ni même d'enregistrer une voie avec un haut débit (2MB/s). Il serait possible pour pallier ce problème de bande passante d'utiliser plusieurs analyseurs DAT en parallèle. Cependant, il se pose alors le problème de la synchronisation entre plusieurs analyseurs. En outre, un tel système à base d'analyseurs DAT placés en parallèle n'est pas souple d'emploi : il n'est pas possible d'avancer ou de reculer dans l'enregistrement tout en gardant une synchronisation entre les analyseurs.

Il existe un autre type d'analyseurs qui réalisent un décodage du protocole de communication. Ceci permet de n'enregistrer que les données utiles. La bande passante nécessaire à l'enregistrement est donc limitée. Cependant, ces analyseurs ne peuvent fonctionner qu'avec des protocoles de communication connus. Or les radars émettent des données selon des protocoles spécifiques. Ce type d'analyseur ne convient pas car il est limité aux protocoles connus. En outre, les données enregistrées doivent être datées pour permettre une synchronisation. Cette datation se fait en ajoutant des marqueurs temporels aux données enregistrées. Ceci peut conduire à des volumes de données important et/ou à une synchronisation peu précise. En outre, le rejeu d'une partie des données enregistrées n'est pas aisé car il faut parcourir toutes les données enregistrées, et lire les marqueurs temporels. Un article IEEE publié en 1997 et intitulé « Digital recording system for high-resolution radar » par Motty et al a décrit un tel analyseur.

Par ses caractéristiques, telles qu'elles seront décrites et revendiquées ci-après, l'invention vise à résoudre les problèmes précités, et notamment enregistrer et rejouer en parallèle des données provenant d'une pluralité d'équipements terminaux, et ce de manière synchronisée, et sans dépendre du protocole de communication.

Pour satisfaire à cet objectif et obtenir d'autres avantages qui ressortiront plus loin, l'invention a notamment pour objet un procédé d'enregistrement de données comme défini par la revendication 1 de la présente demande.Pour la mise en oeuvre du procédé d'enregistrement ainsi défini, l'invention a également pour objet un système d'enregistrement de données comme défini par la revendication 8 de la présente demande.Pour satisfaire à cet objectif, l'invention a également pour objet un procédé de lecture de données comme défini par la revendication 12 de la présente demande.Pour la mise en oeuvre du procédé de lecture ainsi défini, l'invention a également pour objet un système de lecture de données comme défini par la revendication 12 de la présente demande.

L'invention a pour principaux avantages, qu'elle peut être mise en oeuvre en utilisant des composants éprouvés du commerce, ce qui la rend économique, et simple à mettre en oeuvre, et fiable. Elle est en outre ergonomique dans la mesure où elle permet de rejouer partiellement des données de manière simple.

L'invention sera maintenant décrite de manière plus détaillée dans le cadre d'un exemple particulier de réalisation pratique. Dans le cours de cette description, on fera référence aux figures des dessins annexés, parmi lesquelles :
- la figure 1, un schéma synoptique, représente un exemple de système d'enregistrement selon l'invention ;
- la figure 2, un schéma synoptique selon le modèle de représentation en quatre couches TCP/IP, représente un exemple de liaison entre un équipement terminal d'une part, et le système d'enregistrement d'autre part ;
- la figure 3, un schéma synoptique, représente un exemple de mise en forme du signal enregistré sur une ligne, pour être émis selon un protocole de communication TCP/IP sur le réseau local ;
- la figure 4, un schéma synoptique, représente un exemple de mise en oeuvre d'un procédé d'enregistrement circulaire ;
- la figure 5, un schéma synoptique, représente un exemple de système de lecture selon l'invention ;
- les figures 6 et 7, des schémas synoptiques, représentent un exemple d'utilisation de l'invention dans lequel un système d'enregistrement tel que celui représenté sur la figure 1, et un système de lecture tel que celui représenté sur la figure 5, sont reliés au réseau Internet.

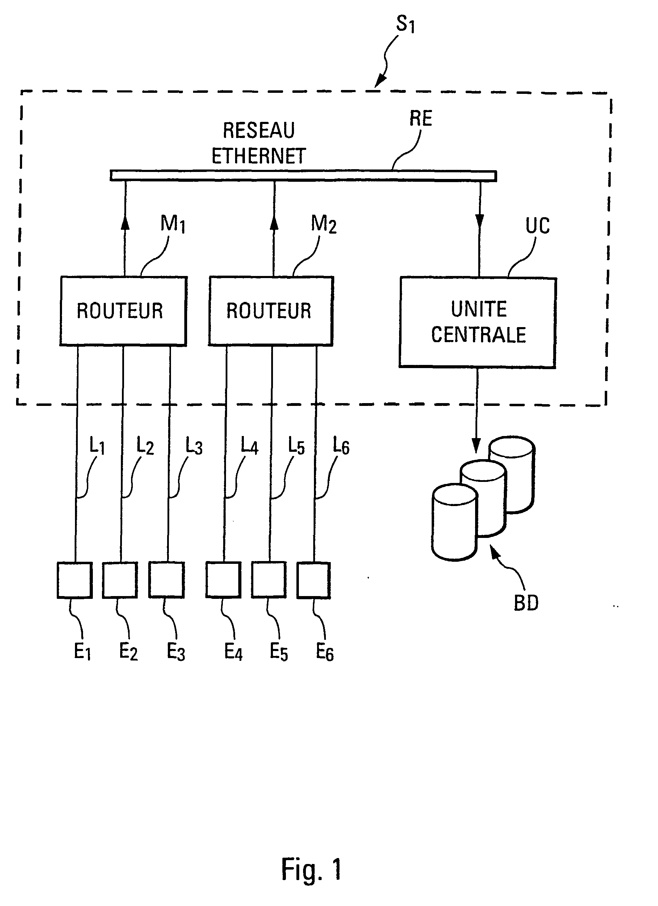

On se réfère maintenant à la figure 1. Dans cet exemple, six équipements terminaux E₁, E₂, E₃, E₄, E₅, E₆. Chaque équipement terminal E₁, E₂, E₃, E₄, E₅, E₆ émet des données sur un ligne de communication L₁, L₂, L₃, L₄, L₅, L₆ qui lui est propre. Les équipements terminaux peuvent être des radars, les lignes de communications peuvent être des lignes séries HDLC par exemple. Bien entendu, les lignes de communications peuvent aussi être des lignes parallèles. Un système d'enregistrement S₁ selon l'invention est relié à ces lignes de communication. Le système d'enregistrement S₁ comprend au moins un routeur, une unité centrale UC et un réseau local RE. Il comprend par exemple deux routeurs M₁, M₂. Chaque ligne de communication est reliée à un seul routeur du système S₁. Le routeur M₁ peut être relié aux lignes L₁ à L₃. Le routeur M₂ peut être relié aux lignes L₄ à L₆. Les routeurs M₁, M₂ et l'unité centrale UC sont en outre reliés au réseau local RE. Les routeurs M₁, M₂ échantillonnent le signal sur chaque ligne de communication, et émettent ce signal sur le réseau local RE en destination de l'unité centrale. L'unité centrale UC enregistre les données reçues dans des fichiers binaires BD. Avantageusement, à chaque ligne de communication est associé au moins un fichier binaire, le nom de ce(s) fichier(s) binaire permettant de retrouver la ligne de communication associée.

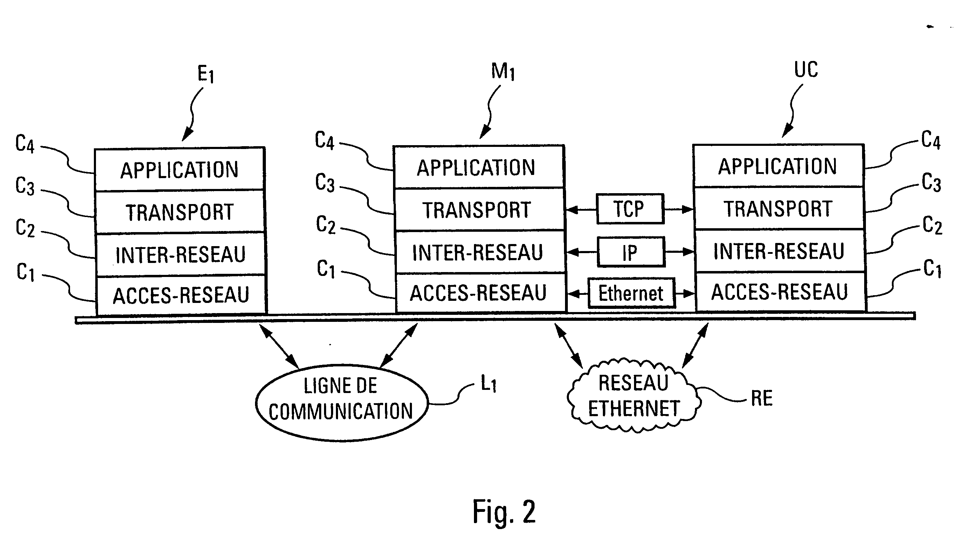

On se réfère maintenant à la figure 2. Cette figure représente dans un modèle TCP/IP la liaison entre l'équipement E₁ et le routeur M₁ d'une part, et la liaison entre le routeur M₁ et l'unité centrale UC d'autre part. Bien entendu, cette description s'applique aussi aux liaisons avec les autres équipements terminaux, ainsi qu'avec l'autre routeur M₂.

Pour mémoire, le modèle TCP/IP est constitué de quatre couches :
- La première couche C₁ est la couche d'accès réseau, connue aussi sous l'expression anglo-saxonne « network acces layer ». Cette couche est équivalente aux couches 1 (couche physique) et 2 (couche liaison) du modèle OSI.
- La seconde couche C₂ est la couche inter-réseau, connue aussi sous l'expression anglo-saxonne « internet layer ». Cette couche est équivalente à la couche 3 (couche réseau) du modèle OSI.
- La troisième couche C₃ est la couche transport, connue aussi sous l'expression anglo-saxonne « transport layer ». Cette couche est équivalente aux couches 4 (couche transport), 5 (couche session) et 6 (couche présentation) du modèle OSI.
- La quatrième couche C₄ est la couche application, connue aussi sous l'expression anglo-saxonne « application layer ». Cette couche est équivalente à la couche 7 (couche application) du modèle OSI.

L'équipement terminal E₁ émet des données sur la ligne de communication L₁ selon un protocole non connu du routeur M₁. Le routeur M₁ ne décode pas ce protocole. Par conséquent, il n'apparaît pas de protocole de communication commun dans le modèle TCP/IP entre l'équipement terminal E1 et le routeur M1, même dans la première couche C₁. Le protocole selon lequel l'équipement terminal E₁ émet sur la ligne L₁ peut être n'importe quel protocole non acquitté. En d'autres termes, ce protocole est mono-directionnel. Il peut être normalisé ou propriétaire. La transmission sur cette ligne L₁ peut être synchrone ou asynchrone. La seule contrainte est la compatibilité de support physique entre l'équipement terminal E₁ et le routeur M₁. Le format électrique peut être n'importe quel format, par exemple le format RS232, RS485, EIA530, EIA530-A ou V35. Tout le signal sur la ligne L1 est échantillonné par le routeur M₁ sans décodage du protocole. En d'autres termes, ce signal est converti en un flot de bits par le routeur M₁.

Le routeur M1 émet le flot de bits échantillonnés sur le réseau local RE. Avantageusement, le réseau local RE est un réseau Ethernet, ce qui permet de connecter autant de routeurs que nécessaire pour engregistrer les données de n'importe quel nombre d'équipements terminaux. Ceci favorise donc l'évolutivité du système de lecture S₁.

Avantageusement, le flot de bits est émis par le routeur M₁ sur le réseau local RE selon un protocole acquitté. Ceci permet de rendre la transmission vers l'unité centrale UC fiable, c'est à dire sans perte d'information.

Avantageusement, le protocole de communication entre le routeur M1 et l'unité centrale UC peut être un protocole sécurisé orienté connexion, c'est à un protocole de transport fiable.

Avantageusement, ce protocole sécurisé orienté connexion peut être le protocole TCP/IP. Ainsi, à chaque ligne de communication est associée une adresse IP. Cette adresse IP peut être un paramètre du programme d'enregistrement de l'unité centrale UC. Le protocole TCP/IP peut par exemple se décomposer au niveau des différentes couches du modèle TCP/IP de la manière suivante :
- au niveau de la couche d'accès réseau C₁, le protocole Ethernet ;
- au niveau de la couche inter-réseau C₂, le protocole internet IP, connu aussi sous l'expression anglo-saxonne « internet protocol » ;
- au niveau de la couche transport C₃, le protocole TCP.

Les fonctions principales du routeur M₁ sont donc notamment l'échantillonnage du signal sur L₁ pour obtenir un flot de bits, la conversion de ce flot de bits au protocole TCP/IP, et le relayage de ce flot de bits vers l'unité centrale UC.

Il existe des routeurs disponibles dans le commerce permettant d'assurer ces fonctions. A titre d'exemple, on peut citer une gamme de produits connus par la marque déposée LINES issue de l'expression anglo-saxonne « Link Interface Node for External Systems ». Ces routeurs, de type modulaire, sont conçus pour permettre le routage parmi des lignes séries entrantes ou sortantes et Ethernet. Les lignes séries standards telles que par exemple HDLC ou BSC sont traitées aussi bien que les lignes dédiées, telles que par exemple les protocoles de transmissions d'information radar particuliers.

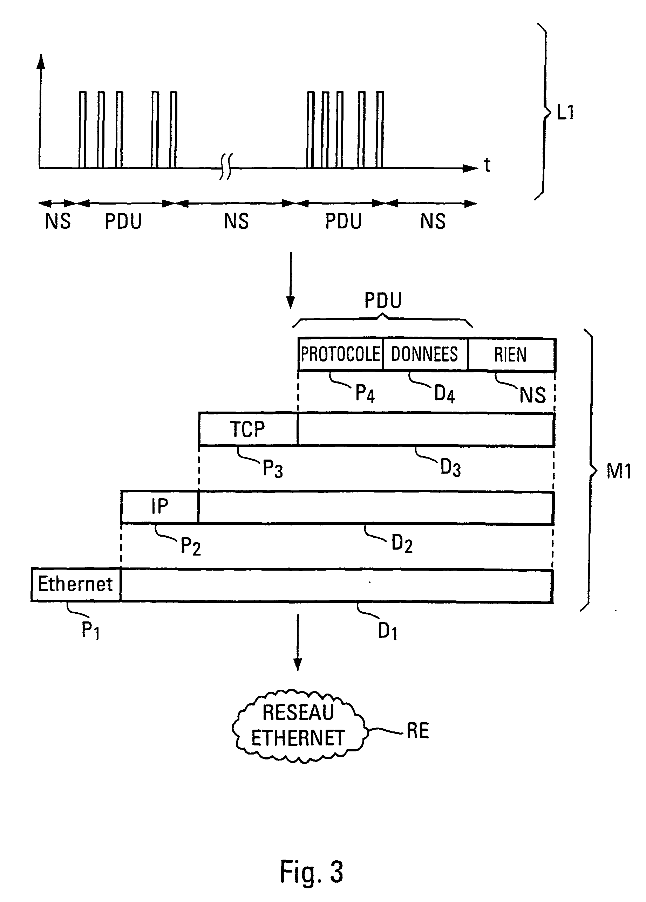

On se réfère maintenant à la figure 3. Le signal échantillonné sur la ligne de communication L₁ comprend des premières plages temporelles PDU où des données sont effectivement émises par l'équipement terminal E₁, et des secondes plages temporelles NS où aucune donnée n'est émise. Les premières plages PDU contiennent les données émises par l'équipement terminal E₁ selon un protocole propre à cet équipement. Ces données sont appelées des unité de données de protocole (connues sous l'expression anglo-saxonne « protocol data unit »). Les unités de données de protocole PDU contiennent des données de deux natures D₄ et P₄ :
- les premières D₄ sont les données réellement émises ;
- les secondes P₄ sont des informations de contrôle du protocole (connues sous l'expression anglo-saxonne « protocol control information ») P₄ ;

Les secondes données P₄ permettent d'indiquer la longueur des données émises D₄, et de corriger des erreurs par exemple. Elles sont destinées à être interprétées et utilisées par un équipement récepteur. Au contraire, le routeur M₁ n'interprète pas ces données. Il échantillonne le signal PDU, NS présent sur la ligne L₁ à une fréquence constante, et ce même en l'absence de données émises NS par l'équipement terminal E₁. Tout le signal échantillonné P₄, D₄, NS forme un flot de bits D₃.

Ceci est particulièrement intéressant pour des données issues de mesures radar, car de telles données comprennent peu de trous, c'est à dire d'absence de données émises NS. L'encodage d'un marqueur temporel avec les données serait conduirait à augmenter le volume de données.

Pour synchroniser l'échantillonnage du signal, on peut utiliser une horloge physique, telle que celle du routeur par exemple. Ceci permet d'utiliser une référence temporelle absolue pour l'échantillonnage, donc commune aux différentes lignes de communication. En d'autres termes, l'utilisation d'horloges physiques permet de synchroniser l'enregistrement sur des signaux sur les différentes lignes de communication.

Avantageusement, les fréquences d'échantillonnage sont déterminées de la manière suivante :
- Si l'équipement terminal émet des données de manière synchrone (protocole synchrone), on utilise une fréquence d'échantillonnage égale à la fréquence d'émission de cet équipement terminal.
- Si l'équipement terminal émet des données de manière asynchrone (protocole asynchrone), on utilise une fréquence d'échantillonnage est égale au débit maximum de la ligne de communication exprimé en bits par seconde. Dans ce cas, le routeur sur-échantillonne le signal.

En d'autres termes, pour chaque équipement terminal émettant des données de manière synchrone, la fréquence d'échantillonnage est égale à la fréquence d'émission dudit équipement terminal, et pour les autres équipements terminaux, la fréquence d'échantillonnage est égale au débit maximum de la ligne de communication.

Les différentes fréquences d'échantillonnage peuvent être enregistrées dans un fichier de configuration des routeurs. Ce fichier de configuration peut être paramétré avant de débuter l'enregistrement. Il contient par exemple :
- le mode électrique de la ligne de communication ;
- la vitesse de transmission ;
- le mode de l'horloge, à savoir l'horloge interne ou bien l'horloge externe.

L'horloge interne est fournie par le routeur. L'horloge externe peut être fournie par l'équipement terminal.

Pour une ligne de communication série HDLC sur laquelle les données sont émises de manière synchrone, la fréquence d'échantillonnage peut être de 2 10⁶ bits par seconde (c'est à dire 2 MB/s). Si la dérive de l'horloge est de 10⁻⁹ (dérive de 1s d'avance ou de retard toutes les 10⁹s), on a une désynchronisation d'un bit toutes les 20 minutes. Cette performance est très nettement supérieure à celle des analyseurs DAT.

Pour émettre le flot de bits D₃ au protocole TCP/IP, des informations de contrôle de protocole sont ajoutées lors du passage d'une couche à une autre. Pour le passage de la couche C₃ à la couche C₂, le routeur M₁ ajoute au flot de bits D₃ des informations de contrôle du protocole TCP (référence P₃ sur la figure), formant ainsi de nouvelles données D₂. Pour le passage de la couche C₂ à la couche C₁, le routeur M₁ ajoute aux nouvelles données D₂ des informations de contrôle du protocole IP (référence P₂ sur la figure), formant ainsi de nouvelles données D₁. Pour le passage de la couche C₁ au support physique du réseau Ethernet, le routeur M₁ ajoute aux nouvelles données D₁ des informations de contrôle du protocole Ethernet (référence P₁ sur la figure).

Le flot de bit D₃ est reçu par l'unité centrale UC qui décode les informations de contrôle de protocole P₁, P₂, P₃. Le flot de bits D₃ est alors enregistré dans un ou plusieurs fichiers binaires BD.

Bien entendu, les mêmes explications s'appliquent aux autres équipements terminaux E₂ à E₆ et à l'autre routeur M₂. A chaque équipement terminal correspond donc un flot de bits qui est transmis à l'unité centrale UC sur un canal (physique ou logiciel) différent.

L'invention permet de rejouer n'importe quelle partie de la séquence enregistrée. Pour débuter le rejeu à partir d'une heure déterminée, il suffit de compter le nombre de bits auquel doit débuter la lecture. La conversion entre une heure et un nombre de bits se fait en utilisant les fréquences d'échantillonnage (constantes pendant toute la durée de l'enregistrement). Ces fréquences d'échantillonnage peuvent être lues dans le fichier de configuration des routeurs par exemple. L'invention permet en outre de rejouer en boucle une partie de la séquence. Ceci bien entendu n'est pas possible en utilisant un analyseur DAT.

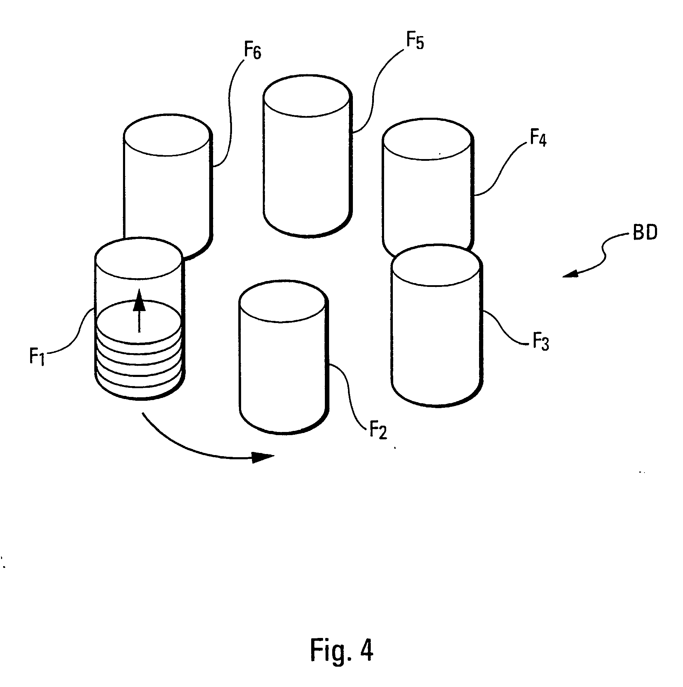

On se réfère maintenant à la figure 4. Avantageusement, l'unité centrale UC met en oeuvre un procédé d'enregistrement circulaire (connu sous l'expression anglo-saxonne « round robin ») pour enregistrer les flots de bits émis sur le réseau local RE. Cet enregistrement circulaire consiste à enregistrer les flots de bits dans un nombre de fichiers binaires déterminé et de taille fixe F₁, F₂, F₃, F₄, F₅, F₆. Lorsqu'un fichier F₁ est plein, les données sont enregistrées dans le fichier suivant. Si tous les fichiers sont remplis, l'enregistrement continue dans le premier fichier, écrasant les données les plus anciennes. Ceci permet d'enregistrer pendant une durée illimitée, et de conserver seulement les dernières heures par exemple d'enregistrement (on arrête l'enregistrement dès la détection d'une anomalie). Ce procédé a pour avantage sa rapidité, et sa facilité de mise en oeuvre en comparaison d'un procédé classique d'écriture à accès direct.

Avantageusement, chaque flot de bit peut être enregistré dans un fichier binaire différent pour faciliter l'accès différencié aux flots de bits.

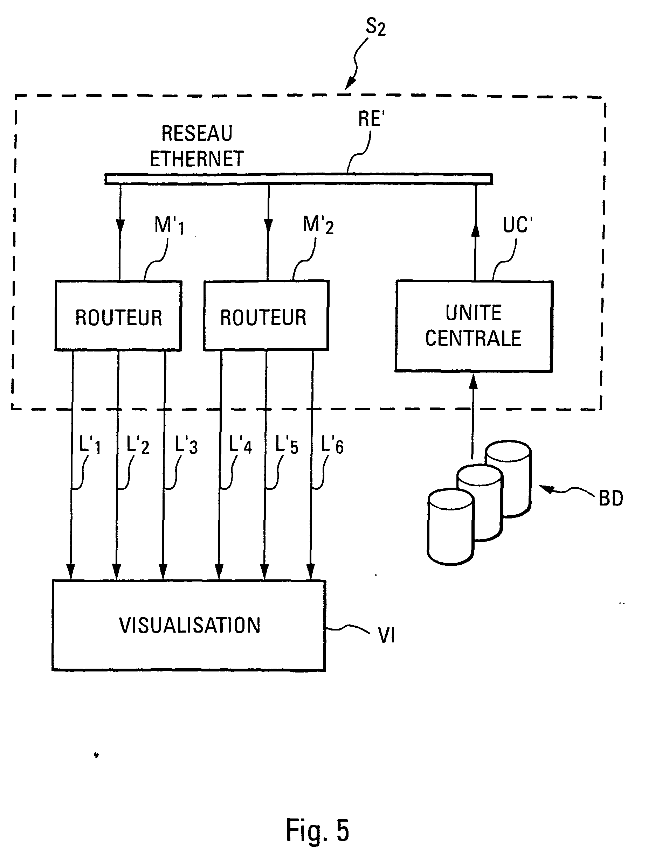

On se réfère maintenant à la figure 5. Les flots de données enregistrés dans les fichiers binaires peuvent être lus par un système de lecture S₂. Ce système de lecture S₂ est destiné à être relié à des lignes de communication de rejeu L'₁, L'₂, L'₃, L'₄, L'₅, L'₆. Les lignes de communication de rejeu sont analogues aux lignes de communication reliées aux équipements terminaux lors de l'enregistrement. Le système de lecture S₂ émet sur ces lignes de manière synchronisée le signal enregistré.

Le système de lecture S₂ comprend au moins un réseau local RE' de rejeu. Ce réseau local RE' a la même topologie que le réseau RE. En d'autres termes, il comprend un noeud principal formé par une unité centrale UC', et des noeuds secondaires formés par les extrémités des lignes de communication de rejeu reliées au réseau local RE'.

Le système de lecture S₂ comprend en outre au moins un routeur. Il comprend par exemple deux routeurs M'₁ et M'₂. Ces routeurs sont reliés au réseau local de rejeu RE'. Ils sont destinés à être reliés aux lignes de communication de rejeu. Chaque ligne de communication de rejeu est reliée à un seul routeur. Par exemple le routeur M'₁ peut être relié aux lignes L'₁, L'₂, L'₃ ; le routeur M'₂ peut être relié aux lignes L'₄, L'₅, L'₆.

L'unité centrale UC' émet les flots de bits enregistrés simultanément sur le réseau local de rejeu RE'. Ces flots de bits sont reçus par les routeurs M'₁, M'₂ et ré-émis sur les lignes L'₁ à L'₆ de sorte à produire à partir de chaque flot de bits ré-émis un signal sur chaque ligne de communication de rejeu. Ces signaux sont produits de manière synchronisée. A cet effet, sur chaque ligne de communication de rejeu, le signal est produit à une fréquence multiple de la fréquence d'échantillonnage. Pour un rejeu en temps réel (la vitesse de rejeu est la même que la vitesse d'enregistrement) on produit sur chaque ligne un signal à la même fréquence que la fréquence d'échantillonnage.

Pour émettre les flots de bits enregistrés sur le réseau local RE', l'unité centrale UC' peut établir des connexions TCP/IP simultanées avec les routeurs. L'unité centrale émet les flots de bits aux routeurs. La fréquence d'émission d'un flot de bits par l'unité centrale UC' est supérieure à la fréquence de ré-émission de ce flot de bits sur la ligne de communication de rejeu. Chaque flot de bits est mémorisé temporairement dans une mémoire tampon. Les flots de bits libèrent progressivement ces mémoires tampon à mesure qu'ils sont ré-émis sous la forme de signaux sur les lignes de communication de rejeu.

Avantageusement, l'unité centrale UC' et les routeurs dialoguent de manière à contrôler le remplissage des mémoires tampon. Le contrôle du remplissage d'une mémoire tampon consiste à :
- éviter de saturer la mémoire ;
- éviter de vider entièrement la mémoire.

En d'autres termes, pour chaque flot de bits, la fréquence d'émission étant supérieure à la fréquence de ré-émission, il est mémorisé temporairement dans une mémoire tampon avant d'être ré-émis, le remplissage de la mémoire tampon étant contrôlé.

Pour éviter de saturer une mémoire tampon, un signal est envoyé du routeur concerné à l'unité centrale UC' dès qu'un seuil maximum de remplissage est atteint. Ce seuil maximum de remplissage peut être par exemple 90% de la capacité de la mémoire tampon. A la réception de ce signal, l'unité centrale UC' stoppe l'émission du flot de bits correspondant à cette mémoire tampon en destination de ce routeur.

Pour éviter de vider entièrement une mémoire tampon, un signal est envoyé du routeur concerné à l'unité centrale UC' dès qu'un seuil minimum de remplissage est atteint. Ce seuil minimum peut être par exemple 10% de la capacité de la mémoire tampon. A la réception de ce signal, l'unité centrale UC' reprend l'émission du flot de bits correspondant à cette mémoire tampon en destination de ce routeur.

Le contrôle du remplissage des mémoires tampon est optionnel. Alternativement, lorsqu'une mémoire tampon est saturée par exemple, les données non mémorisées peuvent être ré-émises régulièrement. De cette manière, la saturation d'une mémoire tampon ne provoque pas de perte de données. De plus, l'émission étant constante, la mémoire tampon ne peut pas se vider entièrement.

Pour émettre de manière synchronisée, c'est à dire produire sur chaque ligne de communication de rejeu un signal à une fréquence multiple de la fréquence d'échantillonnage, les routeurs M'₁, M'₂ peuvent mettre en oeuvre un procédé de contrôle de flux. Le contrôle de flux est un procédé connu de l'homme du métier.

Avantageusement, de la même manière que pour le système d'enregistrement S₁, les flots de bits sont émis sur le réseau local de rejeu selon un protocole de transmission acquitté.

Avantageusement, de la même manière que pour le système d'enregistrement S₁, les flots de bits sont émis sur le réseau local de rejeu selon le protocole TCP/IP.

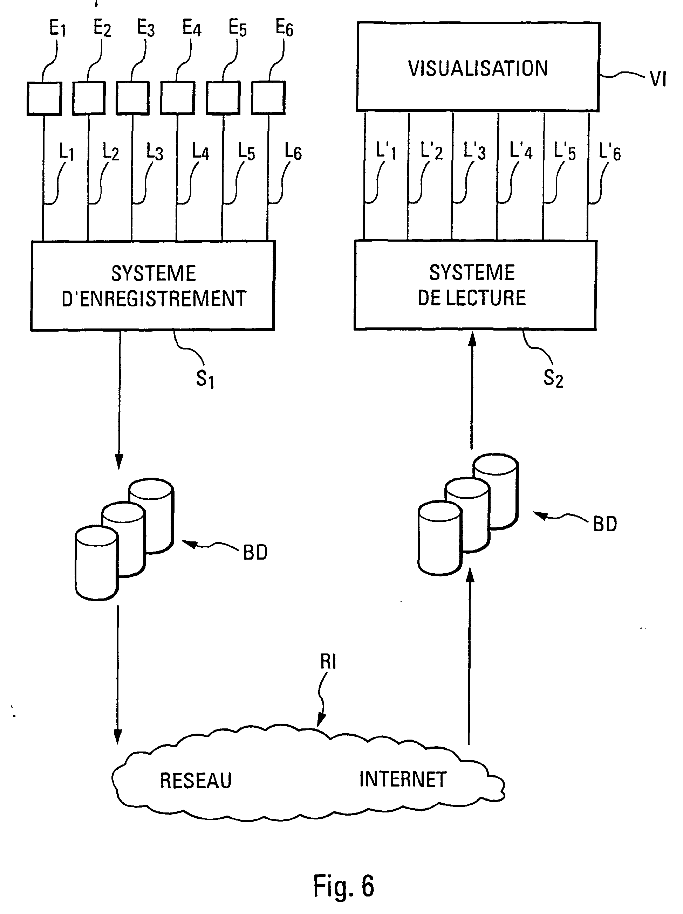

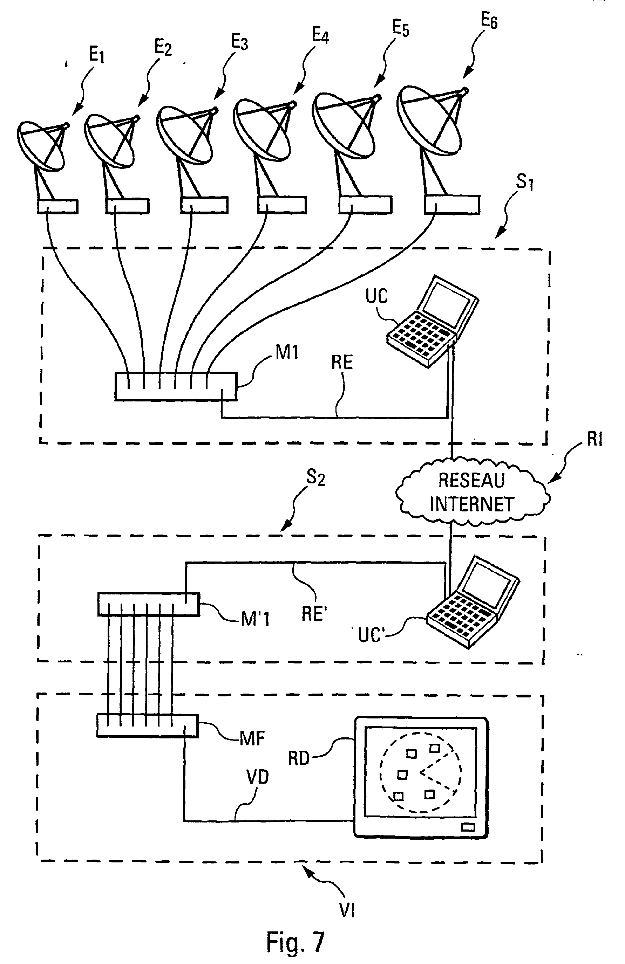

On se réfère maintenant aux figures 6 et 7. L'invention peut être utilisée pour enregistrer des données sur un site, et effectuer des tests sur un autre site. Le système d'enregistrement S₁ peut par exemple être à proximité d'un système de gestion du trafic aérien. Il est relié par exemple à six radars E₁, E₂, E₃, E₄, E₅, E₆. Le système de lecture S₂ peut par exemple être à proximité d'un système de visualisation VI placé dans un centre d'analyse distant. Le système d'enregistrement produit un ensemble de fichiers binaires BD. Ces fichiers peuvent être transmis simplement au système de lecture S₂ par l'intermédiaire du réseau Internet RI par exemple.

Dans le cadre d'une réalisation pratique avantageuse, les unités centrales UC, UC' des systèmes d'enregistrement S₁ et de lecture S₂ respectivement peuvent être des ordinateurs portables équipés de cartes Ethernet. Les routeurs peuvent rester câblés (liaisons permanentes avec le réseau Ethernet et les lignes de communication). Il suffit alors de connecter ces ordinateurs portables au réseau Ethernet. La mise en place des systèmes d'enregistrement et de lecture peut donc être très rapide et très simple.

La sortie du système de lecture S₂ est un ensemble de lignes de communication de rejeu. Le système de visualisation peut comprendre par exemple un dispositif de mise en forme MF, une ligne de communication VD transmettant un signal vidéo, et un écran de visualisation RD. Le dispositif de mise en forme MF peut convertir les signaux de des lignes de communication de rejeu en un signal vidéo. Ce signal vidéo est alors transmis sur la ligne de communication VD vers l'écran RD pour l'affichage des plots radar.

Avantageusement, les logiciels présents dans les unités centrales UC, UC' pour la mise en oeuvre de l'invention sont en langage JAVA, ce qui permet à ces logiciels de fonctionner sur tout système d'exploitation.

L'invention permet d'enregistrer les signaux présents sur des lignes de communications, sans être limité aux protocoles normalisés ou connus, pour autant de lignes que nécessaire, sans limitation de fréquence, quel que soit la vitesse de transmission et le mode électrique. En outre, l'invention permet de rejouer tout ou partie de ces signaux enregistrés, et ce de manière synchrone. Il est possible en outre dans le cadre de l'invention d'utiliser un même système pour réaliser à la fois l'enregistrement et la lecture.

Quoi qu'il en soit, pour être particulièrement avantageux, les modes de réalisation particuliers décrits n'en sont pas moins non limitatif, et diverses variantes, concernant notamment les détails qui ont été indiqués en exemples, resteront dans le cadre de l'invention objet du brevet.

## Revendications

1. Procédé d'enregistrement de données synchronisées provenant d'une pluralité d'équipements terminaux (E₁, E₂, E₃, E₄, E₅, E₆), chaque équipement terminal émettant des données sur une ligne de communication (L₁, L₂, L₃, L₄, L₅, L₆) qui lui est propre, comportant les étapes suivantes :
(a) on échantillonne à fréquence constante le signal (PDU, NS) sur chaque ligne de communication, et ce même en l'absence de données émises, de sorte qu'à chaque équipement terminal corresponde un flot de bits échantillonnés ;
(b) on émet les flots de bits échantillonnés sur un réseau local (RE) ;
(c) on enregistre dans un ou plusieurs fichiers binaires (BD) avec une unité centrale (UC) reliée audit réseau local, les flots de bits émis sur ledit réseau ;
**caractérisé en ce que** certains bits enregistrés peuvent correspondre à un intervalle de temps pendant lequel un terminal n'a pas émis de données, de manière à pouvoir restituer ultérieurement les données en respectant leur synchronisation.

2. Procédé d'enregistrement selon la revendication précédente, **caractérisé en ce que** le réseau local est un réseau Ethernet.

3. Procédé d'enregistrement selon l'une quelconque des revendications précédentes, **caractérisé en ce que** les flots de bits sont émis sur le réseau local vers l'unité centrale selon un protocole de transmission acquitté.

4. Procédé d'enregistrement selon l'une quelconque des revendications précédentes, **caractérisé en ce que** les flots de bits sont émis sur le réseau local vers l'unité centrale selon le protocole TCP/IP.

5. Procédé d'enregistrement selon l'une quelconque des revendications précédentes, **caractérisé en ce que** les flots de bits sont échantillonnés et émis par un ou plusieurs routeurs (M₁, M₂), chaque ligne de communication étant reliée à un seul routeur.

6. Procédé d'enregistrement selon l'une quelconque des revendications précédentes, **caractérisé en ce que** pour chaque équipement terminal émettant des données de manière synchrone, la fréquence d'échantillonnage est égale à la fréquence d'émission dudit équipement terminal, et que pour les autres équipements terminaux, la fréquence d'échantillonnage est égale au débit maximum de la ligne de communication.

7. Procédé d'enregistrement selon l'une quelconque des revendications précédentes, **caractérisé en ce que** l'unité centrale met en oeuvre un procédé d'enregistrement circulaire pour enregistrer lesdits flots de bits émis sur le réseau.

8. Système d'enregistrement (S₁) de données synchronisées provenant d'une pluralité d'équipements terminaux, chaque équipement terminal (E₁, E₂, E₃, E₄, E₅, E₆) émettant des données sur une ligne de communication (L₁, L₂, L₃, L₄, L₅, L₆) qui lui est propre, comprenant au moins :
(a) un ou plusieurs routeurs (M₁, M₂) reliés aux lignes de communication, chaque ligne de communication étant reliée à un seul routeur, pour échantillonner à fréquence constante le signal (PDU, NS) sur chaque ligne de communication, et ce même en l'absence de données émises, de sorte qu'à chaque équipement terminal corresponde un flot de bits échantillonnés ;
(b) un réseau local (RE), auquel sont reliés les routeurs, sur lequel les routeurs émettent les flots de bits échantillonnés ;
(c) une unité centrale (UC) reliée audit réseau local, pour enregistrer dans un ou plusieurs fichiers binaires lesdits flots de bits émis par les routeurs sur ledit réseau ;
**caractérisé en ce que** certains bits enregistrés peuvent correspondre à un intervalle de temps pendant lequel un terminal n'a pas émis de données, de manière à pouvoir restituer ultérieurement les données en respectant leur synchronisation.

9. Système d'enregistrement selon la revendication 8, **caractérisé en ce que** le réseau local est un réseau Ethernet.

10. Système d'enregistrement selon l'une quelconque des revendications 8 à 9, **caractérisé en ce** le protocole de communication du réseau local est un protocole acquitté.

11. Système d'enregistrement selon l'une quelconque des revendications 8 à 10, **caractérisé en ce** le protocole de communication du réseau local est le protocole TCP/IP.

12. Procédé de lecture de données enregistrées sous la forme d'une pluralité de flot de bits échantillonnés provenant d'une pluralité d'équipements terminaux (E₁, E₂, E₃, E₄, E₅, E₆), chaque équipement terminal ayant émis des données sur une ligne de communication (L₁, L₂, L₃, L₄, L₅, L₆) qui lui est propre, les données des différentes lignes étant synchronisées, comportant les étapes suivantes :
(a) on émet simultanément les flots de bits enregistrés sur un réseau local de rejeu (RE') ayant la même topologie que le réseau local (RE) utilisé lors de la mise en oeuvre d'un procédé ayant permis d'enregistrer les données ;
(b) on ré-émet les flots de bits émis sur le réseau local de rejeu (RE') sur des lignes de communication de rejeu, les lignes de communication de rejeu étant analogues aux lignes de communications (L₁, L₂, L₃, L₄, L₅, L₆) reliées aux équipements terminaux (E₁, E₂, E₃, E₄, E₅, E₆), de sorte à produire à partir de chaque flot de bits ré-émis un signal à une fréquence multiple de la fréquence d'échantillonnage ;
**caractérisé en ce que** certaines portions du signal produit peuvent correspondre à un intervalle de temps pendant lequel un terminal n'a pas émis de données, de manière à restituer les données en respectant leur synchronisation.

13. Procédé de lecture de données selon la revendication précédente, **caractérisé en ce que** pour chaque flot de bits la fréquence d'émission étant supérieure à la fréquence de ré-émission, il est mémorisé temporairement dans une mémoire tampon avant d'être ré-émis, le remplissage de la mémoire tampon étant contrôlé.

14. Procédé de lecture de données selon la revendication précédente, **caractérisé en ce que** pour produire sur chaque ligne de communication de rejeu un signal de la fréquence multiple de la fréquence d'échantillonnage, un procédé de contrôle de flux est mis en oeuvre.

15. Procédé de lecture selon l'une quelconque des revendications 12 à 14, **caractérisé en ce que** les flots de bits sont ré-émis sur le réseau local de rejeu selon un protocole de transmission acquitté.

16. Procédé de lecture selon l'une quelconque des revendications 12 à 15, **caractérisé en ce que** les flots de bits sont ré-émis sur le réseau local de rejeu selon le protocole TCP/IP.

17. Système de lecture de données (S₂)enregistrées sous la forme d'une pluralité de flot de bits échantillonnés provenant d'une pluralité d'équipements terminaux (E₁, E₂, E₃, E₄, E₅, E₆), chaque équipement terminal ayant émis des données sur une ligne de communication (L₁, L₂, L₃, L₄, L₅, L₆) qui lui est propre, les données des différentes lignes étant synchronisées, comprenant au moins :
(a) un réseau local de rejeu (RE'), ayant la même topologie que le réseau local (RE) utilisé lors de la mise en oeuvre d'un procédé ayant permis d'enregistrer les données ;
(b) une unité centrale (UC'), reliée au réseau local de rejeu, pour émettre sur le réseau local de rejeu les flots de bits enregistrés ;
(c) un ou plusieurs routeurs (M'₁, M'₂), reliés au réseau local de rejeu, et destinés à être reliés à des lignes de communication de rejeu, pour ré-émettre les flots de bits émis sur le réseau local de rejeu (RE') sur les lignes de communication de rejeu, les lignes de communication de rejeu étant analogues aux lignes de communications (L₁, L₂, L₃, L₄, L₅, L₆) reliées aux équipements terminaux (E₁, E₂, E₃, E₄, E₅, E₆), de sorte à produire à partir de chaque flot de bits ré-émis un signal à une fréquence multiple de la fréquence d'échantillonnage ;
**caractérisé en ce que** certaines portions du signal produit peuvent correspondre à un intervalle de temps pendant lequel un terminal n'a pas émis de données, de manière à restituer les données en respectant leur synchronisation.

18. Système de lecture de données selon la revendication précédente, **caractérisé en ce que** pour chaque flot de bits la fréquence d'émission étant supérieure à la fréquence de ré-émission, il est mémorisé temporairement dans une mémoire tampon avant d'être ré-émis, le remplissage de la mémoire tampon étant contrôlé.

19. Système de lecture de données selon la revendication précédente, **caractérisé en ce que** pour produire sur chaque ligne de communication de rejeu un signal de la fréquence multiple de la fréquence d'échantillonnage, un procédé de contrôle de flux est mis en oeuvre.

20. Système de lecture selon l'une quelconque des revendications 17 à 19, **caractérisé en ce** le protocole de communication du réseau local de rejeu est un protocole acquitté.

21. Système de lecture selon l'une quelconque de revendications 17 à 20, **caractérisé en ce** le protocole de communication du réseau local de rejeu est le protocole TCP/IP.

## Claims

1. A method of recording synchronized data originating from a plurality of terminal units (E₁, E₂, E₃, E₄, E₅, E₆), each terminal unit transmitting data over a communication line (L₁, L₂, L₃, L₄, L₅, L₆) which is specific to it, comprising the following steps:
(a) the signal (PDU, NS) on each communication line is sampled at a constant frequency, even in the absence of transmitted data, in such a way that each terminal unit has a corresponding sampled bit stream;
(b) the sampled bit streams are transmitted over a local area network (RE);
(c) the bit streams transmitted over said network are recorded in one or more binary files (BD) with a central processing unit (CPU) linked to said local area network;
**characterized in that** some recorded bits can correspond to a time interval during which a terminal has not transmitted data, so as to be able to reproduce the data subsequently while correctly observing their synchronization.

2. A recording method according to the preceding claim, **characterized in that** the local area network is an Ethernet network.

3. A recording method according to either of the preceding claims, **characterized in that** the bit streams are transmitted over the local area network to the central processing unit according to an acknowledged transmission protocol.

4. A recording method according to any one of the preceding claims, **characterized in that** the bit streams are transmitted over the local area network to the central processing unit according to the TCP/IP protocol.

5. A recording method according to any one of the preceding claims, **characterized in that** the bit streams are sampled and transmitted by one or more routers (M₁, M₂), each communication line being linked to a single router.

6. A recording method according to any one of the preceding claims, **characterized in that**, for each terminal unit transmitting data synchronously, the sampling frequency is equal to the transmission frequency of said terminal unit, and that for the other terminal units, the sampling frequency is equal to the maximum bit rate of the communication line.

7. A recording method according to any one of the preceding claims, **characterized in that** the central processing unit implements a circular recording method for recording said bit streams transmitted over the network.

8. A system (S₁) for recording synchronized data originating from a plurality of terminal units, each terminal unit (E₁, E₂, E₃, E₄, E₅, E₆) transmitting data over a communication line (L₁, L₂, L₃, L₄, L₅, L₆) which is specific to it, comprising at least:
(a) one or more routers (M₁, M₂) linked to the communication lines, each communication line being linked to a single router, for sampling the signal (PDU, NS) on each communication line at a constant frequency, even in the absence of transmitted data, such that each terminal unit has a corresponding sampled bit stream;
(b) a local area network (RE), to which the routers are linked, over which the routers transmit the sampled bit streams;
(c) a central processing unit (CPU) linked to said local area network, for recording in one or more binary files said bit streams transmitted by the routers over said network;
**characterized in that** some recorded bits can correspond to a time interval during which a terminal has not transmitted data, so as to be able to reproduce the data subsequently while correctly observing their synchronization.

9. A recording system according to Claim 8, **characterized in that** the local area network is an Ethernet network.

10. A recording system according to either of Claims 8 and 9, **characterized in that** the communication protocol of the local area network is an acknowledged protocol.

11. A recording system according to any one of Claims 8 to 10, **characterized in that** the communication protocol of the local area network is the TCP/IP protocol.

12. A method of reading data recorded in the form of a plurality of sampled bit streams originating from a plurality of terminal units (E₁, E₂, E₃, E₄, E₅, E₆), each terminal unit having transmitted data over a communication line (L₁, L₂, L₃, L₄, L₅, L₆) which is specific to it, the data on the different lines being synchronized, comprising the following steps:
(a) the recorded bit streams are transmitted simultaneously over a playback local area network (RE') having the same topology as the local area network (RE) used on implementing a method having made it possible to record the data;
(b) the bit streams transmitted over the playback local area network (RE') are retransmitted over playback communication lines, the playback communication lines being similar to the communication lines (L₁, L₂, L₃, L₄, L₅, L₆) linked to the terminal units (E₁, E₂, E₃, E₄, E₅, E₆), so as to produce from each retransmitted bit stream a signal at a frequency that is a multiple of the sampling frequency;
**characterized in that** certain portions of the signal produced can correspond to a time interval during which a terminal has not transmitted data, so as to reproduce the data while correctly observing their synchronization.

13. A method of reading data according to the preceding claim, **characterized in that**, for each bit stream, the transmission frequency being greater than the retransmission frequency, it is temporarily stored in a buffer memory before being retransmitted, the filling of the buffer memory being controlled.

14. A method of reading data according to the preceding claim, **characterized in that**, to produce on each playback communication line a signal of the frequency that is a multiple of the sampling frequency, a flow control method is implemented.

15. Reading method according to any one of Claims 12 to 14, **characterized in that** the bit streams are retransmitted over the playback local area network according to an acknowledged transmission protocol.

16. Reading method according to any one of Claims 12 to 15, **characterized in that** the bit streams are retransmitted over the playback local area network according to the TCP/IP protocol.

17. A system (S₂) for reading data recorded in the form of a plurality of sampled bit streams originating from a plurality of terminal units (E₁, E₂, E₃, E₄, E₅, E₆), each terminal unit having transmitted data over a communication line (L₁, L₂, L₃, L₄, L₅, L₆) which is specific to it, the data on the different lines being synchronized, comprising at least:
(a) a playback local area network (RE'), having the same topology as the local area network (RE) used on implementing a method having made it possible to record the data;
(b) a central processing unit (CPU'), linked to the playback local area network, for transmitting the recorded bit streams over the playback local area network;
(c) one or more routers (M'₁, M'₂), linked to the playback local area network and intended to be linked to playback communication lines, for retransmitting the bit streams transmitted over the playback local area network (RE') over the playback communication lines, the playback communication lines being similar to the communication lines (L₁, L₂, L₃, L₄, L₅, L₆) linked to the terminal units (E₁, E₂, E₃, E₄, E₅, E₆), so as to produce from each retransmitted bit stream a signal at a frequency that is a multiple of the sampling frequency;
**characterized in that** certain portions of the signal produced can correspond to a time interval during which a terminal has not transmitted data, so as to reproduce the data while correctly observing their synchronization.

18. A data reading system according to the preceding claim, **characterized in that**, for each bit stream, the transmission frequency being greater than the retransmission frequency, it is temporarily stored in a buffer memory before being retransmitted, the filling of the buffer memory being controlled.

19. A data reading system according to the preceding claim, **characterized in that**, to produce on each playback communication line a signal of the frequency that is a multiple of the sampling frequency, a flow control method is implemented.

20. A reading system according to any one of Claims 17 to 19, **characterized in that** the communication protocol of the playback local area network is an acknowledged protocol.

21. A reading system according to any one of Claims 17 to 20, **characterized in that** the communication protocol of the playback local area network is the TCP/IP protocol.

## Patentansprüche

1. Verfahren zur Aufzeichnung synchronisierter Daten, die von mehreren Endeinrichtungen (E₁, E₂, E₃, E₄, E₅, E₆) kommen, wobei jede Endeinrichtung Daten auf einer ihr eigenen Verbindungsleitung (L₁, L₂, L₃, L₄, L₅, L₆) sendet, das die folgenden Schritte aufweist:
(a) das Signal (PDU, NS) wird auf jeder Verbindungsleitung mit konstanter Frequenz abgetastet, und dies selbst in Abwesenheit von gesendeten Daten, so dass jeder Endeinrichtung ein Fluss von abgetasteten Bits entspricht;
(b) die Flüsse von abgetasteten Bits werden in einem lokalen Netz (RE) gesendet;
(c) in einer oder mehreren Binärdateien (BD) mit einer Zentraleinheit (UC), die mit dem lokalen Netz verbunden ist, werden die in dem Netz gesendeten Bitflüsse aufgezeichnet;
**dadurch gekennzeichnet, dass** bestimmte aufgezeichnete Bits einem Zeitschlitz entsprechen können, während dem eine Endeinrichtung keine Daten gesendet hat, um später die Daten unter Berücksichtigung ihrer Synchronisation wiederherstellen zu können.

2. Aufzeichnungsverfahren nach dem vorhergehenden Anspruch, **dadurch gekennzeichnet, dass** das lokale Netz ein Ethernet ist.

3. Aufzeichnungsverfahren nach einem der vorhergehenden Ansprüche, **dadurch gekennzeichnet, dass** die Bitflüsse im lokalen Netz gemäß einem quittierten Übertragungsprotokoll zur Zentraleinheit gesendet werden.

4. Aufzeichnungsverfahren nach einem der vorhergehenden Ansprüche, **dadurch gekennzeichnet, dass** die Bitflüsse im lokalen Netz gemäß dem Protokoll TCP/IP zur Zentraleinheit gesendet werden.

5. Aufzeichnungsverfahren nach einem der vorhergehenden Ansprüche, **dadurch gekennzeichnet, dass** die Bitflüsse von einem oder mehreren Routern (M₁, M₂) abgetastet und gesendet werden, wobei jede Verbindungsleitung mit einem einzigen Router verbunden ist.

6. Aufzeichnungsverfahren nach einem der vorhergehenden Ansprüche, **dadurch gekennzeichnet, dass** für jede Endeinrichtung, die synchron Daten sendet, die Abtastfrequenz gleich der Sendefrequenz der Endeinrichtung ist, und dass für die anderen Endeinrichtungen die Abtastfrequenz gleich der maximalen Übertragungsgeschwindigkeit der Verbindungsleitung ist.

7. Aufzeichnungsverfahren nach einem der vorhergehenden Ansprüche, **dadurch gekennzeichnet, dass** die Zentraleinheit ein zirkulares Aufzeichnungsverfahren anwendet, um die im Netz gesendeten Bitflüsse aufzuzeichnen.

8. System (S₁) zur Aufzeichnung von synchronisierten Daten, die von mehreren Endeinrichtungen kommen, wobei jede Endeinrichtung (E₁, E₂, E₃, E₄, E₅, E₆) Daten auf einer ihr eigenen Verbindungsleitung (L₁, L₂, L₃, L₄, L₅, L₆) sendet, das mindestens aufweist:
(a) einen oder mehrere Router (M₁, M₂), die mit den Verbindungsleitungen verbunden sind, wobei jede Verbindungsleitung mit einem einzigen Router verbunden ist, um mit konstanter Frequenz das Signal (PDU, NS) auf jeder Verbindungsleitung abzutasten, und dies selbst in Abwesenheit von gesendeten Daten, so dass jeder Endeinrichtung ein Fluss von abgetasteten Bits entspricht;
(b) ein lokales Netz (RE), mit dem die Router verbunden sind, in dem die Router die Flüsse von abgetasteten Bits senden;
(c) eine Zentraleinheit (UC), die mit dem lokalen Netz verbunden ist, um in einer oder mehreren Binärdateien die Flüsse von Bits aufzuzeichnen, die von den Routern im Netz gesendet werden;
**dadurch gekennzeichnet, dass** bestimmte aufgezeichnete Bits einem Zeitschlitz entsprechen können, während dem eine Endeinrichtung keine Daten gesendet hat, um später die Daten unter Berücksichtigung ihrer Synchronisation wiederherstellen zu können.

9. Aufzeichnungssystem nach Anspruch 8, **dadurch gekennzeichnet, dass** das lokale Netz ein Ethernet ist.

10. Aufzeichnungssystem nach einem der Ansprüche 8 bis 9, **dadurch gekennzeichnet, dass** das Kommunikationsprotokoll des lokalen Netzes ein quittiertes Protokoll ist.

11. Aufzeichnungssystem nach einem der Ansprüche 8 bis 10, **dadurch gekennzeichnet, dass** das Kommunikationsprotokoll des lokalen Netzes das Protokoll TCP/IP ist.

12. Verfahren zum Lesen von in Form von mehreren abgetasteten Bitflüssen, die von mehreren Endeinrichtungen (E₁, E₂, E₃, E₄, E₅, E₆) kommen, aufgezeichneten Daten, wobei jede Endeinrichtung Daten auf einer ihr eigenen Verbindungsleitung (L₁, L₂, L₃, L₄, L₅, L₆) gesendet hat, wobei die Daten der verschiedenen Leitungen synchronisiert sind, das die folgenden Schritte aufweist:
(a) es werden gleichzeitig die aufgezeichneten Bitflüsse in einem lokalen Wiederholungsnetz (RE') gesendet, das die gleiche Topologie hat wie das lokale Netz (RE), das bei der Anwendung eines Verfahrens verwendet wird, das die Aufzeichnung der Daten erlaubt hat;
(b) die im lokalen Wiederholungsnetz (RE') gesendeten Daten werden über Wiederholungs-Verbindungsleitungen wieder gesendet, wobei die Wiederholungs-Verbindungsleitungen analog zu den Verbindungsleitungen (L₁, L₂, L₃, L₄, L₅, L₆) sind, die mit den Endeinrichtungen (E₁, E₂, E₃, E₄, E₅, E₆) verbunden sind, um ausgehend von jedem wieder gesendeten Bitfluss ein Signal mit einer Frequenz zu erzeugen, die ein Vielfaches der Abtastfrequenz ist;
**dadurch gekennzeichnet, dass** bestimmte Abschnitte des erzeugten Signals einem Zeitschlitz entsprechen können, während dem eine Endeinrichtung keine Daten gesendet hat, um die Daten unter Berücksichtigung ihrer Synchronisation wiederherzustellen.

13. Verfahren zum Lesen von Daten nach dem vorhergehenden Anspruch, **dadurch gekennzeichnet, dass**, da für jeden Bitfluss die Sendefrequenz höher ist als die Sendewiederholfrequenz, er vorübergehend in einem Pufferspeicher gespeichert wird, ehe er wieder gesendet wird, wobei das Füllen des Pufferspeichers überwacht wird.

14. Verfahren zum Lesen von Daten nach dem vorhergehenden Anspruch, **dadurch gekennzeichnet, dass** zur Erzeugung in jeder Wiederholungs-Verbindungsleitung eines Signals der Frequenz, die ein Vielfaches der Abtastfrequenz ist, ein Verfahren der Flussüberwachung angewendet wird.

15. Leseverfahren nach einem der Ansprüche 12 bis 14, **dadurch gekennzeichnet, dass** die Bitflüsse im lokalen Wiederholungsnetz gemäß einem quittierten Übertragungsprotokoll wieder gesendet werden.

16. Leseverfahren nach einem der Ansprüche 12 bis 15, **dadurch gekennzeichnet, dass** die Bitflüsse im lokalen Wiederholungsnetz gemäß dem Protokoll TCP/IP wieder gesendet werden.

17. System (S₂) zum Lesen von Daten, die in Form mehrerer Flüsse von abgetasteten Bits aufgezeichnet sind, die von mehreren Endeinrichtungen (E₁, E₂, E₃, E₄, E₅, E₆) kommen, wobei jede Endeinrichtung Daten auf einer ihr eigenen Verbindungsleitung (L₁, L₂, L₃, L₄, L₅, L₆) gesendet hat, wobei die Daten der verschiedenen Leitungen synchronisiert sind, das mindestens aufweist:
(a) ein lokales Wiederholungsnetz (RE'), das die gleiche Topologie hat wie das lokale Netz (RE), das bei der Anwendung eines Verfahrens verwendet wird, das es erlaubt hat, die Daten aufzuzeichnen;
(b) eine Zentraleinheit (UC'), die mit dem lokalen Wiederholungsnetz verbunden ist, um im lokalen Wiederholungsnetz die aufgezeichneten Bitflüsse zu senden;
(c) einen oder mehrere Router (M'₁, M'₂), die mit dem lokalen Wiederholungsnetz verbunden und dazu bestimmt sind, mit Wiederholungs-Verbindungsleitungen verbunden zu werden, um die im lokalen Wiederholungsnetz (RE') gesendeten Bits wieder in den Wiederholungs-Verbindungsleitungen zu senden, wobei die Wiederholungs-Verbindungsleitungen analog den Verbindungsleitungen (L₁, L₂, L₃, L₄, L₅, L₆) sind, die mit den Endeinrichtungen (E₁, E₂, E₃, E₄, E₅, E₆) verbunden sind, um ausgehend von jedem wieder gesendeten Bitfluss ein Signal mit einer Frequenz zu erzeugen, die ein Vielfaches der Abtastfrequenz ist;
**dadurch gekennzeichnet, dass** bestimmte Abschnitte des erzeugten Signals einem Zeitschlitz entsprechen können, während dem eine Endeinrichtung keine Daten gesendet hat, um die Daten unter Berücksichtigung ihrer Synchronisation wiederherzustellen.

18. Datenlesesystem nach dem vorhergehenden Anspruch, **dadurch gekennzeichnet, dass**, da für jeden Bitfluss die Sendefrequenz höher ist als die Sendewiederholfrequenz, er vorübergehend in einem Pufferspeicher gespeichert wird, ehe er wieder gesendet wird, wobei das Füllen des Pufferspeichers überwacht wird.

19. Datenlesesystem nach dem vorhergehenden Anspruch, **dadurch gekennzeichnet, dass** zur Erzeugung in jeder Wiederholungs-Verbindungsleitung eines Signals mit der Frequenz, die ein Vielfaches der Abtastfrequenz ist, ein Flussüberwachungsverfahren angewendet wird.

20. Lesesystem nach einem der Ansprüche 17 bis 19, **dadurch gekennzeichnet, dass** das Kommunikationsprotokoll des lokalen Wiederholungsnetzes ein quittiertes Protokoll ist.

21. Lesesystem nach einem der Ansprüche 17 bis 20, **dadurch gekennzeichnet, dass** das Kommunikationsprotokoll des lokalen Wiederholungsnetzes das Protokoll TCP/IP ist.
